# EUROPÄISCHE PATENTSCHRIFT

(11) **EP 0 487 856 B1**
(45) Veröffentlichungstag und Bekanntmachung des Hinweises auf die Patenterteilung: **20.11.1996**
(21) Anmeldenummer: 91116487.9
(22) Anmeldetag: 26.09.1991
(51) Int. Cl.: C21B 13/14

(54) **Verfahren zur Herstellung von Roheisen bzw. Eisenschwamm**
Process for producing pig iron or reduced iron
Procédé pour la fabrication de fente ou d'éponge de fer

(30) Priorität: 29.11.1990 DE 4037977
(43) Veröffentlichungstag der Anmeldung: 03.06.1992
(73) Patentinhaber: DEUTSCHE VOEST-ALPINE INDUSTRIEANLAGENBAU GMBH, 40094 Düsseldorf (DE); VOEST-ALPINE INDUSTRIEANLAGENBAU GESELLSCHAFT m.b.H., A-4031 Linz (AT)
(72) Erfinder: Hauk, Rolf, Dipl.-Ing. Dr., W-7590 Achern (DE); Kepplinger, Leopold Werner, Dipl.-Ing. Dr., A-4060 Leonding-Hart (AT)
(74) Vertreter: Pfenning, Meinig & Partner

(56) Entgegenhaltungen:
- EP-A- 0 179 014
- WO-A-80/02034
- AT-C- 389 124
- DE-A- 2 907 022
- DE-A- 2 947 128
- FR-A- 2 272 177
- FR-A- 2 500 480
- US-A- 3 909 244
- PATENT ABSTRACTS OF JAPAN vol. 12, no. 279 (C-517)(3126) 1. August 1988 & JP-A-63 60 218 (NIPPON KOKAN) 16. März 1988

## Beschreibung

Die Erfindung betrifft ein Verfahren zur Herstellung von Roheisen, bei dem Eisenerz in einem Reduktionsschachtofen reduziert und der hierdurch erhaltene Eisenschwamm anschließend in einem Einschmelzvergaser aufgeschmolzen werden, wobei in dem Einschmelzvergaser ein Kohlenstoffträger und ein oxidierendes Gas eingeführt und das im Einschmelzvergaser erzeugte Gas als Reduktionsgas in dem Reduktionsschachtofen geleitet werden.

Aus der DE-PS 28 43 303 ist ein Verfahren zur Erzeugung von flüssigem Roheisen und Reduktions-gas in einem Einschmelzvergaser, in dem Eisenschwammpartikel zu flüssigem Roheisen oder Stahlvormaterial eingeschmolzen werden und aus zugeführter Kohle und oberhalb der Schmelze eingeblasenem sauerstoffhaltigen Gas die zum Schmelzen erforderliche Wärme und Reduktionsgas erzeugt werden, bekannt. Bei diesem Verfahren fällt relativ viel Überschußgas (Exportgas) an und der Energieverbrauch, das heißt der Verbrauch von Kohle und Sauerstoff liegt sehr hoch. Falls das Überschußgas nicht wirtschaftlich verwendet werden kann, liegen die Erzeugungskosten für das Roheisen sehr hoch. Die chemische Energie im Überschußgas beträgt mehr als 50 % der^{*}Kohle zugeführten Energie und die Ausnutzung des im Einschmelzvergaser erzeugten Reduktionsgases liegt bei maximal 44 %.

Aus der US-PS 4 225 340 ist es bekannt, das Gicht*mit der gas eines Reduktionsschachtofens weitgehend von Kohlendioxid zu befreien und das so aufbereitete Gichtgas für die Erzeugung frischen Reduktionsgases zu verwenden. Dieses wird dem Ausgangsgas eines fossile Brennstoffe verarbeitenden Vergasers, einem hinter den Vergaser geschalteten Gasreaktor und weiterhin dem Ausgangsgas des Gasreaktors direkt sowie über einen Gaserhitzer zugeführt. Das Ausgangsgas des Gasreaktors mit dem zugemischten aufbereiteten Gichtgas wird als Reduktionsgas in den Reduktionsschachtofen geleitet. Dieses bekannte Verfahren dient jedoch nur zur Erzeugung von Eisenschwamm ohne Verwendung eines Einschmelzvergasers.

Ein ähnliches Verfahren zur Eisenschwammerzeugung ist aus der US-PS 4 260 412 bekannt. Bei diesem wird ebenfalls durch Kohlendioxidentfernung aufbereitetes Gichtgas eines Reduktionsschachtofens zur Herstellung des frischen Reduktionsgases verwendet. Als Gaserzeuger dient ein Wirbelschicht-Vergaser, dem das aufbereitete Gichtgas, Kohle und Kalk sowie Sauerstoff und gegebenenfalls Wasserdampf zugeführt werden.

Dem Ausgangsgas dieses Vergasers wird das aufbereitete Gichtgas direkt sowie über einen Gaserhitzer zugemischt, bevor es in den Reduktionsschachtofen geführt wird. Auch dieses Verfahren arbeitet somit ohne Einschmelzvergaser zur Herstellung von Roheisen.

Nach der DE-PS 34 38 487.1 ist ein Verfahren zur Herstellung von Roheisen bekannt, wobei das Gichtgas des Reduktionsschachtofens von den oxidierenden Bestandteilen (CO₂ und H₂O) zumindest teilweise befreit und das so aufbereitete Gichtgas in den Einschmelzvergaser geführt wird. Die Verwertung des energetisch hochwertigen Gichtgases ist ökonomisch nicht befriedigend gelöst.

Eine vollständige Gasrückführung nach der Reinigungsstufe in den Einschmelzvergaser ist nur mit Kohlen möglich, die einen Gehalt an flüchtigen Bestandteilen unter 25% (waf) aufweisen. Der Aufheizung des Gichtgases nach Reinigung mittels Wärmetauscher sind Grenzen gesetzt, die einer effektiven Verwertung entgegenstehen.

Des weiteren ist in EP-A 179 014 ein Verfahren zur Herstellung von Roheisen beschrieben, bei dem das Gichtgas aus dem Reduktionsschachtofen zuerst in einem Wäscher von oxidierenden Bestandteilen befreit und dann teilweise nach Vorerhitzung auf 300 °C bis 600 °C mittels eines Wärmetauschers durch Leitungen dem Einschmelzvergaser zugeführt und zum anderen Teil durch Hindurchführen durch eine weitere Leitung, das kalte Gichtgas mit dem heißen Reduktionsgas aus dem Einschmelzvergaser vermischt wird, wobei das dem Reduktionsschachtofen zugeführte Reduktionsgas eine Temperatur von etwa 850 °C hat.

Auch in JP-A 636 0218 und FR-A 22 A 72 177 werden analoge Verfahren angesprochen.

Es ist daher Aufgabe der vorliegenden Erfindung, ein Verfahren der anfangs genannten Art anzugeben, bei dem eine erhebliche Temperaturerhöhung des Gichtgases ohne CO-Zerfall zur zusätzlichen Produktion von Eisenschwamm angestrebt wird.

Diese Aufgabe wird erfindungsgemäß nach Anspruch 1 gelöst. Das von oxidierenden Bestandteilen gereinigte und vorgewärmte Gichtgas wird durch eine Teilverbrennung unter Zugabe von Sauerstoff auf eine Reduktionstemperatur von 750 °C bis 850 °C gebracht.

Gemäß einer vorteilhaften Ausbildung dieses Verfahrens werden dem gereinigten Gichtgas vor Eintritt in den Wärmetauscher Inhibitoren zugegeben, die als SO₂, H₂S, NH₃, (CN)₂, NO₂ oder CL₂ einzeln oder in Kombination eingesetzt werden. Weiterhin kann dem gereinigten Gichtgas vor Eintritt in den Wärmetauscher gekühltes Vergasergas zugegeben werden. In einer besonderen Ausgestaltung der Erfindung wird die Teilverbrennung in einem Wirbelbett- oder Wanderschichtreaktor durchgeführt, wobei der Reaktor auf der Basis von regenerativ durch Teilgas-Verbrennung beheizten Keramikteilchen betrieben wird. Das verwendete Teilgas wird bei der CO₂-Wäsche gewonnen. Desweiteren ist es möglich, die Teilverbrennung mittels Plasmabrenner oder elektrischer Widerstandsheizung und umschaltbarer indirekter Wärmetauscher durchzuführen. Eine spezielle Ausgestaltung der Erfindung sieht vor, daß das von oxidierenden Bestandteilen gereinigte und vorgewärmte Gichtgas zumindest teilweise über den Einschmelzvergaser (2) in einen weiteren Reduktionsschachtofen (15) eingeleitet wird.
Die beiliegenden Zeichnungen zeigen beispielhaft eine mögliche Ausführungsform.
Es bedeutet:
- Fig. 1: die schematische Darstellung einer Anlage zur Herstellung von Roheisen mit Gichtgaserwärmung in einer Teilverbrennungsanlage und anschließendem Reduktionsschachtofen,
- Fig. 2: die schematische Darstellung einer Anlage zur Herstellung von Roheisen mit Wirbelbettreaktor als Teilverbrennungsanlage.

Die Anlage enthält einen in bekannter Weise ausgebildeten Reduktionsschachtofen 1, in dem von oben über einen nicht gezeigten Einlaß Eisenerz und Zuschlagstoffe zugeführt werden.

Unter dem Reduktionsschachtofen 1 ist der Einschmelzvergaser 2 angeordnet, der über Leitung 3 den durch die Reduktion des Eisenerzes erzeugten Eisenschwamm aufnimmt, woraus eine Roheisenschmelze gebildet wird.

Hierzu werden dem Einschmelzvergaser 2 Kohle und Sauerstoff zugeführt. Dem Reduktionsschachtofen 1 wird aus dem Einschmelzvergaser 2 über eine Leitung 4 Reduktionsgas zugeleitet.

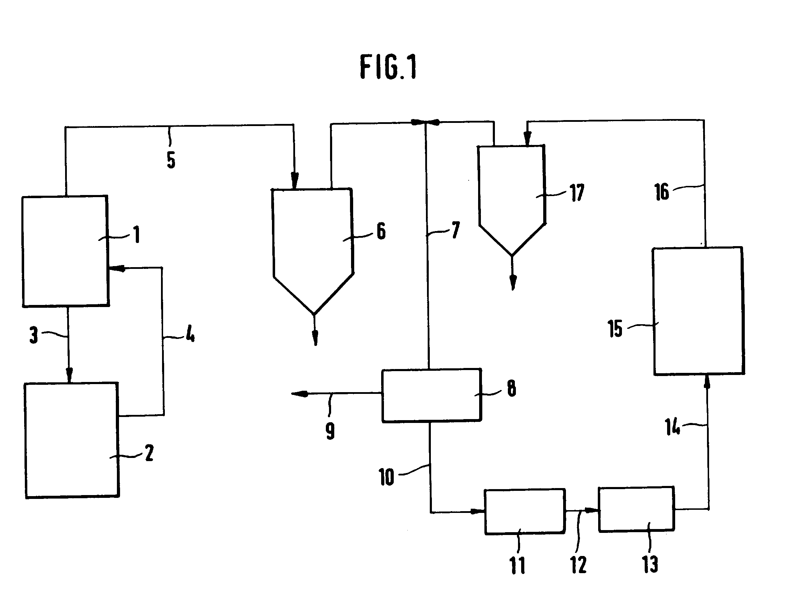

Das Gichtgas des Reduktionsschachtofens 1 wird über die Leitung 5 in den Wäscher 6 geführt, wo es von Staub und Wasserdampf gereinigt wird (Fig. 1). Über die Leitung 7 gelangt das Gas in den CO₂-Wäscher 8, der auch als Druckwechselabsorber-PSA (pressure swing absorption)-Anlage ausgebildet sein kann. Von dort wird das CO₂-reiche Restgas zur weiteren Verwendung über Leitung 9 abgeführt und das Reduktionsgas zur Erwärmung über Leitung 10 in den Wärmetauscher 11 geführt. Aus dem Wärmetauscher 11 gelangt das Gas über Leitung 12 in die Teilverbrennungsanlage 13, von wo es über Leitung 14 von unten in den Reduktionsschachtofen 15 gebracht wird.

Nach Austritt aus dem Reduktionsschachtofen 15 wird das Gas durch Leitung 16 über einen weiteren Wäscher 17 oder direkt in den CO₂-Wäscher 8 geführt.

Das den CO₂-Wäscher 8 über Leitung 10 verlassende Gas weist einen Rest-CO₂-Gehalt von 2 % und eine Temperatur von 30 °C bis 60 °C auf. Das Aufheizen dieses Gases auf Reduktionstemperatur kann nicht in einer Stufe über den Wärmetauscher 11 erfolgen, da hierbei der Bereich des CO-Zerfalls durchlaufen wird, der bei etwa 550 °C bis 600 °C ein Maximum aufweist.

Aus diesem Grund wird die Aufheizung des Gichtgases im Wärmetauscher 11 nur bis zu einer Temperatur von etwa 200 °C bis 500 °C durchgeführt. Die weitere Aufheizung auf Reduktionstemperatur wird durch die Teilverbrennungsanlage 13 mittels in den Gasstrom eingespeistem Sauerstoff erreicht.

Im Ausführungsbeispiel ist bei einer rückgeführten Gasmenge von 60 000 Nm³/h und einer Vorheizung im Wärmetauscher 11 auf 400 °C eine Teilverbrennung mit etwa 1 700 Nm³ Sauerstoff erforderlich, um eine Reduktionstemperatur von 850 °C zu erreichen. Hierdurch wird das Reduktionsgas teilweise entwertet und der CO₂ - und H₂O-Gehalt steigt von 2 % auf etwa 7,7 % an. Durch das niedrige Reduktionspotential des Gases ist eine Erhöhung der dem Reduktionsschachtofen 15 zugeführten Reduktionsgasmenge erforderlich, und zwar umso mehr, je niedriger die im Wärmetauscher 11 erzielbare Vorwärmtemperatur ist.

So erhöht sich z.B. die erforderliche Reduktionsgasmenge pro Tonne Erz bei einer Verringerung der Vorwärmtemperatur von 500 °C auf 400 °C um 80 Nm³/t Erz (von 1340 auf 1260 Nm³/t Erz).

Um die Vorwärmtemperatur im Wärmetauscher 11 auf Temperaturen über 500 °C zu erhöhen und damit die Teilverbrennung durch Sauerstoff zu vermindern, werden dem Gas vor Eintritt in den Wärmetauscher 11 Inhibitoren beigemischt, womit gleichzeitig der CO-Zerfall unterdrückt wird. Als Inhibitoren werden z.B. SO₂, H₂S, NH₃, (CN)₂, NO₂ oder CL₂ verwendet.

Auf diese Weise kann die Qualität des Reduktionsgases verbessert und die Produktion von Eisenschwamm erhöht werden. In diesem Zusammenhang ist es möglich, dem Gas vor Eintritt in den Wärmetauscher 11 gekühltes Vergasergas zuzumischen. Dieses Gas enthält ca. 500 ppm H₂S, so daß auch in diesem Fall eine Unterdrückung des CO-Zerfalls gegeben ist.

Möglich ist es ebenfalls, die Teilverbrennung bzw. eine Aufheizung mittels Plasmabrenner oder elektrischer Widerstandsheizung durchzuführen.

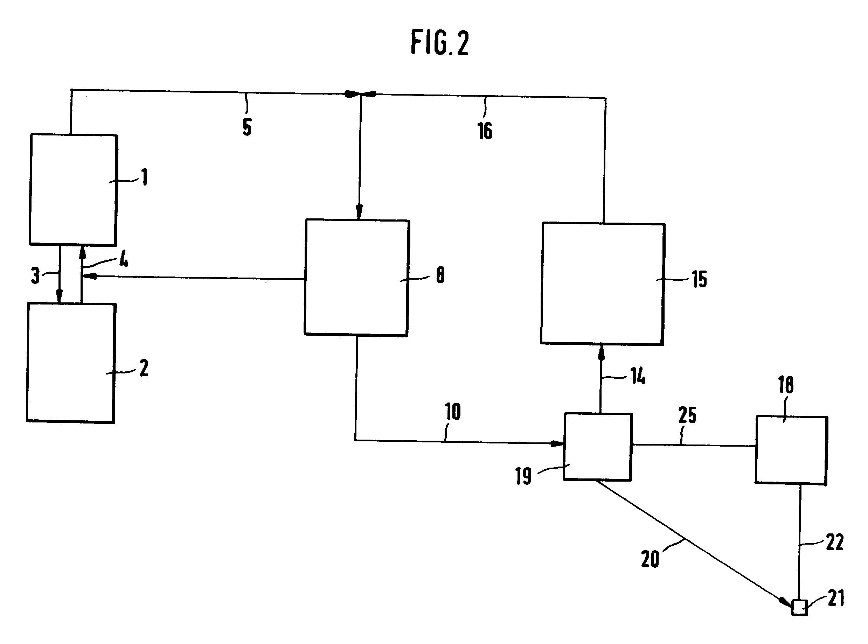

Weiterhin kann die Teilverbrennung in einem Wirbelbett- oder Wanderschichtreaktor durchgeführt werden, wobei der Reaktor auf der Basis von regenerativ durch Teilgas-Verbrennung beheizten Keramikteilchen betrieben wird, wie das näher aus Fig. 2 ersichtlich ist.

Das Teilgas kann dabei aus dem CO₂Wäscher 8 bzw. vorzugsweise der Druckwechselabsorptionsanlage-PSA herrühren.

Im getrennt und erhöht angeordneten Regenerator 18 werden die Keramikteilchen auf ca. 900 °C erhitzt, wobei auch abgeschiedener Kohlenstoff verbrannt wird. Die so erhitzten Keramikteilchen werden über die Leitung 25 in den Wärmetauscher 19 gefördert und geben ihre Wärme an das über die Leitung 10 in den Wärmetauscher 19 einströmende Gas ab. Das so erhitzte Gas strömt über die Leitung 14 in den Reduktionsschacht 15. Die erkalteten Keramikteilchen gelangen über die Leitung 20 zu einer Förderstation 21 und werden hier unter Zugabe eines Fördermediums in den Regenerator 18 gefördert, wo sie erneut erhitzt werden.

Eine Vorerwärmung des Gases im Wirbelbettreaktor 19 auf 750 °C bis 800 °C ist ausreichend, da dem Reduktionsschachtofen 15 keine zu kalzinierenden Zuschläge zugeführt werden. Vorteilhaft ist hierbei, daß hierzu Schwachgas, z.B. Restgas, verwendet werden kann und sich die Gasqualität während des Aufheizens kaum verschlechtert. Anstelle der Teilverbrennungsanlage 13 ist es auch ohne weiteres möglich, eine Aufheizung des Gichtgases mittels Plasmabrenner, elektrischer Widerstandsheizung oder umschaltbarer indirekter Wärmetauscher vorzunehmen.

## Patentansprüche

1. Verfahren zur Herstellung von Eisenschwamm und Roheisen, wobei eisenhaltige Rohstoffe in einem Reduktionsschachtofen (1) in Anwesenheit eines in einem Eisenschmelzvergaser (2) angefallenen Reduktionsgases zu Eisenschwamm reduziert werden, der gewonnene Eisenschwamm im Einschmelzvergaser unter Zuführung eines festen Kohlenstoffträgers, von Sauerstoff oder O₂-haltigen Gasen aufgeschmolzen wird und wobei das aus dem Reduktionsschachtofen stammende Gichtgas ggf. von oxidierenden Bestandteilen (CO₂ und H₂O) gereinigt, zumindest teilweise einem Wärmetauscher zugeführt und als reduzierendes Gas dem Schacht des Reduktionsofens (1) zugeführt wird,
**dadurch gekennzeichnet**,
daß das von oxidierenden Bestandteilen gereinigte und in dem Wärmetauscher (11) auf 200 °C bis 500 °C vorgewärmte Gichtgas durch eine Teilverbrennung unter Zugabe von Sauerstoff auf eine Reduktionstemperatur von 750 °C bis 850 °C erhitzt wird und dann dem Reduktionsschachtofen (1) zugeführt wird.

2. Verfahren nach Anspruch 1,
dadurch gekennzeichnet, daß das von oxidierenden Bestandteilen gereinigte, durch Teilverbrennung vorgewärmte Gichtgas dann einem weiteren Reduktionsschachtofen zugeführt wird.

3. Verfahren nach Anspruch 1 oder 2,
dadurch gekennzeichnet, daß dem gereinigten Gichtgas vor Eintritt in den Wärmetauscher (11) Inhibitoren zugegeben werden.

4. Verfahren nach Anspruch 3,
dadurch gekennzeichnet, daß als Inhibitoren SO₂, H₂S, NH₃, (CN)₂, NO₂ oder CL₂ einzeln oder in Kombination eingesetzt werden.

5. Verfahren nach Anspruch 1 oder 2,
dadurch gekennzeichnet, daß dem gereinigten Gichtgas vor Eintritt in den Wärmetauscher (11) gekühltes Vergasergas zugegeben wird.

6. Verfahren nach Anspruch 1 oder 2,
dadurch gekennzeichnet, daß die Aufheizung in einem Wirbelbett- oder Wanderschichtreaktor (19) durchgeführt wird.

7. Verfahren nach Anspruch 6,
dadurch gekennzeichnet, daß der Wirbelbett- oder Wanderschichtreaktor (19) auf der Basis von regenerativ durch Teilgasverbrennung beheizten Keramikteilchen betrieben wird.

8. Verfahren nach Anspruch 1 oder 2,
dadurch gekennzeichnet, daß die Aufheizung mittels Plasmabrenner durchgeführt wird.

9. Verfahren nach Anspruch 1 oder 2,
dadurch gekennzeichnet, daß die Aufheizung mittels elektrischer Widerstandsheizung durchgeführt wird.

10. Verfahren nach Anspruch 1 oder 2,
dadurch gekennzeichnet, daß die Aufheizung mittels eines umschaltbaren indirekten Wärmetauschers durchgeführt wird.

11. Verfahren nach Anspruch 1 bis 10,
dadurch gekennzeichnet, daß das heiße Reduktionsgas vor Eintritt in den Reduktionsschachtofen (1, 15) einer Heißgasentschwefelung unterzogen wird.

12. Verfahren nach Anspruch 1 oder 2,
dadurch gekennzeichnet, daß das zurückgeführte CO₂-freie Reduktionsgas in einem Wärmetauscher (11) auf 200 °C bis 500 °C aufgeheizt und zusammen mit O₂ direkt dem Einschmelvergaser (2) eingegeben wird.

## Claims

1. Process for the production of sponge iron and pig iron, wherein raw materials containing iron are reduced to sponge iron in a reduction shaft furnace (1) in the presence of a reduction gas produced in an iron melt gasifier (2), the sponge iron obtained is melted in the melt-down gasifier by oxygen or gases containing oxygen with the addition of a solid carbon carrier, and wherein the blast furnace gas from the reduction shaft furnace is purified, if necessary, of oxidising constituents (CO₂ and H₂O), at least some of it is passed to a heat exchanger and passed as reducing gas to the shaft of the reduction furnace (1), characterised in that the blast furnace gas, which has been purified of oxidising constituents and preheated in the heat exchanger (11) to 200°C to 500°C, is heated by partial combustion by adding oxygen to a reduction temperature of 750°C to 850°C and is then passed on to the reduction shaft furnace.

2. Process according to Claim 1, characterised in that the blast furnace gas, which has been purified of oxidising constituents and preheated by partial combustion, is then passed to a further reduction shaft furnace.

3. Process according to Claim 1 or 2, characterised in that inhibitors are added to the purified blast furnace gas before entry into the heat exchanger (11).

4. Process according to Claim 3, characterised in that the inhibitors used are SO₂, H₂S, NH₃ (CN)₂, NO₂ or Cl₂, either alone or in combination.

5. Process according to Claim 1 or 2, characterised in that cooled gasifier gas is added to the purified blast furnace gas before entry into the heat exchanger (11).

6. Process according to Claim 1 or 2, characterised in that heating is carried out in a fluidised-bed or moving bed reactor (19).

7. Process according to Claim 6, characterised in that the fluidised-bed or moving bed reactor (19) is operated on the basis of ceramic particles regeneratively heated by partial gas combustion.

8. Process according to Claim 1 or 2, characterised in that heating is carried out by means of plasma burners.

9. Process according to Claim 1 or 2, characterised in that heating is carried out by means of electrical resistance heating.

10. Process according to Claim 1 or 2, characterised in that heating is carried out by means of a reversible indirect heat exchanger.

11. Process according to Claims 1 to 10, characterised in that the hot reduction gas is subjected to a hot gas desulphurisation before entry into the reduction shaft furnace (1, 15).

12. Process according to Claim 1 or 2, characterised in that the returned CO₂-free reduction gas is heated in a heat exchanger (11) to 200°C to 500°C and is fed directly into the melt-down gasifier (2) together with O₂.

## Revendications

1. Procédé de fabrication d'éponge de fer et de fonte brute, dans lequel des matières premières contenant du fer sont réduites en éponge de fer dans un four réducteur à cuve (1) en présence d'un gaz réducteur produit dans un gazéificateur (2) de fer en fusion, l'éponge de fer ainsi obtenue étant, dans le gazéificateur de fusion, portée à fusion par introduction d'un support solide à base de carbone, d'oxygène ou de gaz oxygéné, et où le gaz de gueulard provenant du four réducteur à cuve éventuellement débarrassé des constituants oxydants (CO₂ et H₂O) est au moins partiellement réduit dans un échangeur de chaleur, et, en tant que gaz réducteur, est envoyé à la cuve du four réducteur (1), caractérisé en ce que le gaz gueulard, débarrassé des constituants oxydants et préchauffé dans l'échangeur de chaleur (11) entre 200°C et 500°C, est porté, par combustion partielle et moyennant l'adjonction d'oxygène, à une température de réduction située entre 750 et 850°C, et est ensuite amené au four réducteur à cuve (1).

2. Procédé selon la revendication 1, caractérisé en ce que le gaz de gueulard, débarrassé des constituants oxydants et préchauffé par la combustion partielle, est amené ensuite a un autre four réducteur à cuve.

3. Procédé selon la revendication 1 ou 2, caractérisé en ce qu'on ajoute des inhibiteurs au gaz de gueulard avant son entrée dans l'échangeur de chaleur (11).

4. Procédé selon la revendication 3, caractérisé en ce qu'on utilise comme inhibiteur du SO₂, du H₂S, du NH₃, du (CN)₂, du NO₂ ou du CL₂ seuls ou en combinaison.

5. Procédé selon la revendication 1 ou 2, caractérisé en ce qu'on ajoute au gaz de gueulard purifié un gaz de gazéificateur refroidi, avant son entrée dans l'échangeur de chaleur (11).

6. Procédé selon la revendication 1 ou 2, caractérisé en ce que le chauffage est réalisé dans un réacteur à lit fluidisé ou à lit mobile (19).

7. Procédé selon la revendication 6, caractérisé en ce que le réacteur à lit fluidisé ou à lit mobile (19) fonctionne sur la base de particules de céramiques chauffées par la chaleur perdue provenant de la combusion partielle du gaz.

8. Procédé selon la revendication 1 ou 2, caractérisé en ce que le chauffage est réalisé au moyen d'un chalumeau à plasma.

9. Procédé selon la revendication 1 ou 2, caractérisé en ce que le chauffage est réalisé au moyen d'un chauffage électrique à résistance.

10. Procédé selon la revendication 1 ou 2, caractérisé en ce que le chauffage est réalisé au moyen d'un échangeur de chaleur indirect commutable.

11. Procédé selon les revendication 1 à 10, caractérisé en ce que le gaz de réduction à chaud est soumis, avant son entrée dans le four réducteur à cuve (1, 15) à une désulfuration des gaz chauds.

12. Procédé selon la revendication 1 ou 2, caractérisé en ce que le gaz de réduction, exempt de CO₂ et recyclé, est chauffé entre 200 et 500°C dans un échangeur de chaleur (11) et introduit directement dans le gazéificateur de fusion (2) en même temps que l'oxygène.
